(19) Europäisches Patentamt
European Patent Office
Office européen des brevets

(11) **EP 3 519 267 B1**

(12) **FASCICULE DE BREVET EUROPEEN**

(45) Date de publication et mention
de la délivrance du brevet:
**08.07.2020 Bulletin 2020/28**

(21) Numéro de dépôt: **17772444.0**

(22) Date de dépôt: **28.09.2017**

(51) Int Cl.:
**B60W 40/04** *(2006.01)*    **B60W 40/06** *(2012.01)*
**G01S 7/48** *(2006.01)*    **G01S 17/04** *(2020.01)*
**G01S 17/86** *(2020.01)*    **G01S 17/931** *(2020.01)*

(86) Numéro de dépôt international:
**PCT/EP2017/074710**

(87) Numéro de publication internationale:
**WO 2018/060379 (05.04.2018 Gazette 2018/14)**

(54) **ASSISTANCE À LA CONDUITE SUR VOIE RAPIDE À CHAUSSÉES SÉPARÉES PAR UN RAIL DE SÉCURITÉ**

FAHRHILFE AUF EINER AUTOBAHN MIT DURCH EINE LEITPLANKE GETRENNTEN FAHRBAHNEN

DRIVING ASSISTANCE ON A HIGHWAY WITH CARRIAGEWAYS SEPARATED BY A GUARDRAIL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.09.2016 FR 1659239**

(43) Date de publication de la demande:
**07.08.2019 Bulletin 2019/32**

(73) Titulaire: **Valeo Schalter und Sensoren GmbH
74321 Bietigheim-Bissingen (DE)**

(72) Inventeurs:
• **HEITZMANN, Thomas
94046 Créteil Cedex (FR)**

• **LIENNARD, Thomas
94046 Créteil Cedex (FR)**
• **BRADAI, Benazouz
94046 Créteil Cedex (FR)**

(74) Mandataire: **Claassen, Maarten Pieter et al
Valeo Schalter und Sensoren GmbH
CDA-IP
Laiernstraße 12
74321 Bietigheim-Bissingen (DE)**

(56) Documents cités:
**DE-A1-102014 014 120    DE-U1-202014 006 923
US-A1- 2002 107 637    US-A1- 2010 097 200
US-A1- 2014 330 479    US-B1- 9 395 192**

**Description**

La présente invention concerne de manière générale les véhicules automobiles, et plus précisément un procédé et un système d'assistance à la conduite sur voie rapide à chaussées séparées par un rail de sécurité.

US 2002/107637 A1 divulgue un procédé d'assistance à la conduite d'un véhicule automobile sur une voie rapide à chaussées séparées par un rail de sécurité comprenant une étape de détection de présence et de modélisation du rail de sécurité à partir de mesures effectuées en continu par au moins un capteur scanner laser monté sur le véhicule automobile.

Les systèmes d'assistance à la conduite pour véhicules regroupent différentes fonctionnalités, en particulier l'assistance au changement voie ou LCC (initiales anglo-saxonnes mises pour Lane Change Control), la régulation de vitesse ou ACC (initiales anglo-saxonnes mises pour Auto Cruise Control), ou l'arrêt et le redémarrage du véhicule en fonction des conditions de trafic et/ou des signalisations (feux, stop, céder le passage...).

Ils ont ainsi pour fonction générale de définir, la trajectoire que doit suivre le véhicule et permettre par suite de contrôler les organes de contrôle de la direction du véhicule et du système de freinage, pour que cette trajectoire soit effectivement suivie. La trajectoire doit être comprise ici dans sa définition mathématique, c'est-à-dire comme étant l'ensemble des positions successives qui doivent être occupées par le véhicule autonome au cours du temps. Ainsi, les systèmes d'assistance doivent définir non seulement le chemin à emprunter, mais aussi le profil de vitesses à respecter. Pour ce faire, ils utilisent de nombreuses informations sur l'environnement immédiat du véhicule (présence d'obstacles tels que des piétons, de cycles ou autres véhicules motorisés, détection de panneaux de signalisation, configuration routière...), en provenance de divers moyens de détection utilisant des caméras, radars, lidars équipant le véhicule, ainsi que des informations liées au véhicule lui-même, telles que sa vitesse, son accélération, sa position donnée par exemple par un système de navigation type GPS. A partir de ces différentes informations, un module de planification de trajectoire compris dans le système d'assistance détermine la trajectoire à suivre.

Les constructeurs et équipementiers automobiles s'intéressent depuis peu à une fonctionnalité particulière d'assistance à la conduite sur voie rapide telle qu'une autoroute en condition de trafic important. Le but de cette assistance ponctuelle est de permettre au véhicule d'évoluer de manière automatisée sur des tronçons de route adaptés, comme des voies rapides à chaussées séparées. Le système est envisagé pour fonctionner en-dessous d'une certaine vitesse, typiquement de l'ordre de 50-70 km/h, et principalement dans des conditions d'embouteillages, pour permettre à la voiture de suivre d'elle-même les voies de circulation, tout en adaptant son allure au trafic et à la vitesse réglementaire. Un tel mode de conduite automatisée ne nécessite pas de surveillance continue de la part du conducteur. Ce dernier peut ainsi effectuer une activité secondaire. Lors d'une phase de conduite automatisée, le système peut demander néanmoins au conducteur de reprendre le contrôle de son véhicule, dans le cas où il sortirait par exemple d'un tronçon de route adapté ou en cas de vitesse de circulation plus rapide.

Pour réaliser une telle fonctionnalité, l'utilisation d'un module de navigation, par exemple de type GPS, embarqué dans le véhicule, pourrait paraître suffisante puisqu'un tel module de navigation fournit les attributs de la route sur laquelle on se trouve (en l'occurrence la classe fonctionnelle et la limite de vitesse de la route empruntée, permettant de dériver le type de route et notamment de savoir si l'on est sur autoroute ou autre), attributs à partir desquels on pourrait modéliser le contexte routier, et autoriser dès lors l'activation du mode automatisé si l'on se trouve bien sur une voie rapide de type autoroute. Néanmoins, un module de navigation seul n'est pas jugé suffisant en termes de sécurité car ses informations peuvent comporter des erreurs. Par ailleurs, un module de navigation n'est pas toujours opérationnel en situation de roulage.

Or, une façon de reconnaitre qu'un véhicule évolue sur une voie rapide de type autoroute est la présence d'un rail de sécurité séparant les chaussées (voies inverses de circulation) de cette voie rapide.

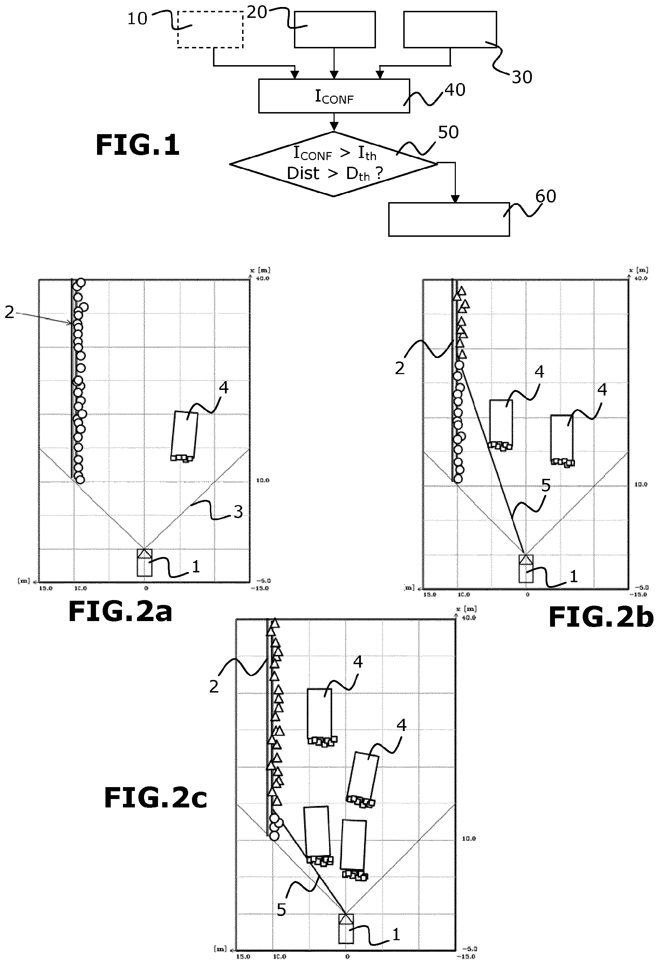

Dans un système connu de ce type actuellement en cours de développement et d'expérimentation, et dont le fonctionnement est schématisé sur la figure 1, l'activation du mode de conduite automatique sur voie rapide peut être autorisée (étape 60 sur la figure 1) dès lors que l'on sait, par l'intermédiaire d'un module de navigation 10, que l'on est bien sur une voie rapide et que l'on a réussi à détecter, avec un indice de confiance suffisant, la présence du rail de sécurité sur cette voie rapide. Plus précisément, on utilise les mesures fournies en continu par un capteur scanner laser 20 embarqué sur le véhicule pour détecter la présence du rail de sécurité, et modéliser ce rail. En outre, une détection d'obstacles, tels que des véhicules tiers situés à l'avant du véhicule, est réalisée en parallèle à partir d'images capturées par une caméra frontale 30 embarquée également sur le véhicule.

Pour illustrer le principe de la détection du rail de sécurité, les figures 2a, 2b et 2c illustrent, à titre d'exemple, les points d'impact du capteur scanner laser 20 obtenus pour différentes situations de roulage d'un véhicule 1 équipé du système précédent, ce véhicule 1 se déplaçant sur une autoroute avec un rail de sécurité séparateur 2. Sur les trois figures, le cône 3 illustre la zone d'observation du capteur scanner laser 20. La référence 4 représente les obstacles, typiquement des véhicules tiers, présents sur la zone avant du véhicule 1, détectés par ailleurs grâce aux images capturées par la caméra frontale 30. Dans le cas de la figure 2a (faible trafic à l'avant du véhicule 1), on constate que la présence du véhicule tiers 4 n'est pas gênant pour la détermination de la présence du rail de sécurité 2. L'ensemble des points d'impact situés le long de ce rail, représentés sous forme de ronds, vont servir à la modélisation du rail, par exemple en utilisant l'algorithme de Ransac (abréviation mise pour RANdom SAmple Consensus) ou équivalent, permettant de déterminer une droite qui s'ajuste au mieux aux points d'impact obtenus. Pour discriminer les mesures à utiliser pour la modélisation du rail, entre les points d'impact situés le long du rail 2 et ceux résultant de la présence d'un véhicule tiers 4 (représentés par des carrés), on utilise avantageusement les informations de détection d'obstacles issues du traitement des images capturées par la caméra 30.

Les figures 2b et 2c montrent en revanche des cas où le trafic à l'avant du véhicule 1 est beaucoup plus important, avec en particulier la présence de véhicules tiers 4 venant obstruer l'action du scanner laser 20 notamment sur le rail de sécurité 2. Ainsi, tous les points d'impact représentés sous forme de triangles le long du rail 2 au-dessus de la ligne droite 5 ne sont en pratique pas disponibles et ne peuvent donc servir à la détection et la modélisation du rail de sécurité. On conçoit donc intuitivement que la détection d'un rail de sécurité par le capteur scanner laser 20 est moins fiable dans les cas de trafic dense, en raison d'un nombre plus réduit de points d'impact disponibles pour la modélisation du rail de sécurité détecté.

Ainsi, avec le système précédent, et comme schématisé sur la figure 1, il est prévu qu'une étape 40 de détection de présence et de modélisation du rail de sécurité 2, réalisée à partir de mesures effectuées en continu par au moins le capteur scanner laser 20, comprenne la détermination d'un indice de confiance $I_{CONF}$ associé à la détection du rail par le capteur scanner laser 20.

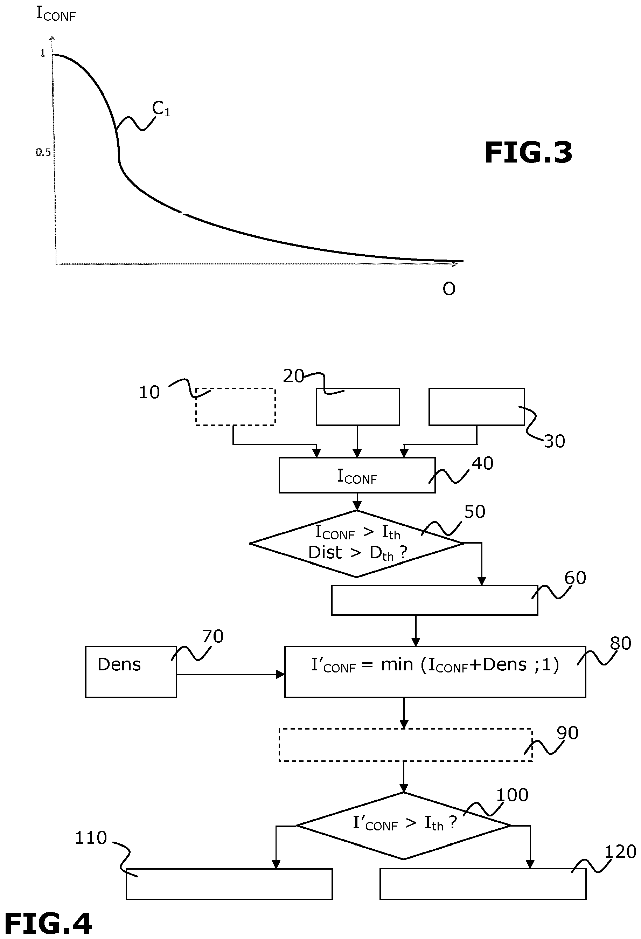

Comme décrit précédemment, cet indice de confiance $I_{CONF}$ va être variable en fonction des conditions de trafic à l'avant du véhicule, ces conditions de trafic pouvant être modélisées par un paramètre O représentatif du nombre et/ou de la position des obstacles détectés à l'avant du véhicule 1, en d'autres termes d'une grille d'occupation à l'avant du véhicule 1. La courbe $C_1$ de la figure 3 illustre un exemple de variations de cet indice de confiance $I_{CONF}$ en fonction du paramètre O.

Cet indice de confiance, recalculé en temps réel, est comparé lors d'une étape 50, à un seuil de confiance $I_{th}$, de sorte qu'il est possible d'autoriser l'activation du mode de conduite automatique (étape 60) lorsque l'indice de confiance $I_{CONF}$ est supérieur au seuil de confiance $I_{th}$ pendant au moins une durée prédéfinie correspondant à une distance de roulage minimum $D_{th}$ parcourue par le véhicule automobile 1.

Le système prévoit en outre le maintien du mode de conduite automatique tant qu'un indice de confiance courant associé à la détection est supérieur au seuil de confiance $I_{th}$ et la désactivation du mode de conduite automatique lorsque l'indice de confiance courant passe en-dessous du seuil de confiance.

L'un des problèmes posés par le système précédent réside dans le fait que, lorsque le véhicule 1 vient d'être autorisé à passer en mode de conduite automatique grâce à la détection du rail de sécurité associée à un indice de confiance suffisant, les conditions de trafic peuvent être amenées à évoluer très rapidement, notamment par un accroissement du trafic. Dans certains cas, cela peut amener rapidement le système à désactiver le mode de conduite automatique, et ce, alors même que la fonctionnalité est supposée rester active en conditions d'embouteillage.

La présente invention a pour but d'adresser ce problème particulier.

Pour ce faire, l'invention a pour objet un procédé d'assistance à la conduite d'un véhicule automobile sur une voie rapide à chaussées séparées par un rail de sécurité comprenant :

- une étape de détection de présence et de modélisation du rail de sécurité à partir de mesures effectuées en continu par au moins un capteur scanner laser monté sur le véhicule automobile, comprenant la détermination d'un indice de confiance $I_{CONF}$ associé à la détection par le capteur scanner laser ;
- une étape d'activation d'un mode de conduite automatique lorsque ledit indice de confiance $I_{CONF}$ est supérieur à un seuil de confiance $I_{th}$ pendant au moins une durée prédéfinie correspondant à une distance de roulage minimum $D_{th}$ parcourue par le véhicule automobile;
- une étape de maintien dudit mode de conduite automatique tant qu'un indice de confiance courant associé à la détection est supérieur audit seuil de confiance $I_{th}$ ; et
- une étape de désactivation dudit mode de conduite automatique lorsque l'indice de confiance courant passe en-dessous dudit seuil de confiance ;

ledit procédé comportant en outre une étape d'estimation de la densité de trafic à l'avant du véhicule automobile à partir d'images capturées par une caméra embarquée sur ledit véhicule automobile, procédé dans lequel, après activation dudit mode de conduite automatique, ledit indice de confiance courant pris en compte dans les étapes de désactivation et de maintien est fonction d'une combinaison de l'indice de confiance $I_{CONF}$ associé à la détection de présence du rail de sécurité et de la densité de trafic estimée.

Outre les caractéristiques principales qui viennent d'être mentionnées dans le paragraphe précédent, le procédé selon l'invention peut présenter une ou plusieurs caractéristiques complémentaires parmi les suivantes :

- l'indice de confiance $I_{CONF}$ associé à la détection par le capteur scanner laser est déterminé avantageusement en fonction du nombre et/ou de la position d'objets détectés à l'avant du véhicule automobile à partir des images capturées par la caméra ;

- la modélisation du rail de sécurité utilise de préférence les mesures effectuées en continu par le capteur scanner laser, auxquelles on a enlevé les mesures coïncidant à des objets détectés à l'avant du véhicule automobile à partir des images capturées par la caméra.

L'invention a également pour objet un système d'assistance à la conduite d'un véhicule automobile sur une voie rapide à chaussées séparées par un rail de sécurité comprenant un capteur scanner laser et une caméra embarqués sur ledit véhicule automobile, ledit système étant configuré pour implémenter les étapes suivantes :

- une étape de détection de présence et de modélisation du rail de sécurité à partir de mesures effectuées en continu par au moins ledit capteur scanner laser, comprenant la détermination d'un indice de confiance $I_{CONF}$ associé à la détection par le capteur scanner laser ;
- une étape d'activation d'un mode de conduite automatique lorsque ledit indice de confiance $I_{CONF}$ est supérieur à un seuil de confiance $I_{th}$ pendant au moins une durée prédéfinie correspondant à une distance de roulage minimum $D_{th}$ parcourue par le véhicule automobile;
- une étape de maintien dudit mode de conduite automatique tant qu'un indice de confiance courant associé à la détection est supérieur audit seuil de confiance $I_{th}$ ;
- une étape de désactivation dudit mode de conduite automatique lorsque l'indice de confiance courant passe en-dessous dudit seuil de confiance ; et
- une étape d'estimation de la densité de trafic à l'avant du véhicule automobile à partir d'images capturées par ladite caméra,

système dans lequel, après activation dudit mode de conduite automatique, ledit indice de confiance courant pris en compte dans les étapes de désactivation et de maintien est fonction d'une combinaison de l'indice de confiance $I_{CONF}$ associé à la détection de présence du rail de sécurité et de la densité de trafic estimée.

L'invention sera mieux comprise à la lecture de la description qui suit, faite en référence aux figures annexées, dans lesquelles :

- la figure 1, déjà décrite, décrit des étapes possibles pour l'activation d'un mode de conduite automatique sur détection de la présence d'un rail de sécurité séparant les chaussées d'une voie rapide ;
- les figures 2a, 2b et 2c, décrites précédemment, illustrent trois exemples de points d'impact obtenus par un capteur scanner laser dans trois situations de roulages différentes ;
- la figure 3 représente schématiquement l'allure des variations d'un indice de confiance associé à la détection d'un rail de sécurité, en fonction de l'occupation de l'environnement situé à l'avant du véhicule ;

- la figure 4 illustre des étapes d'un procédé d'assistance à la conduite dans une mise en œuvre possible conforme à l'invention ;
- la figure 5 représente schématiquement l'allure des variations de la densité de trafic en fonction de l'occupation de l'environnement situé à l'avant du véhicule ; - la figure 6 représente schématiquement l'allure des variations d'un indice de confiance courant associé à la détection d'un rail et calculé selon les principes de l'invention.

En référence à la figure 4, et comme déjà décrit précédemment en relation avec la figure 1, un système d'assistance à la conduite pour un véhicule automobile empruntant une voie rapide à chaussées séparées par un rail de sécurité comporte un capteur scanner laser 20 et une caméra frontale 30 embarqués sur le véhicule. Le système utilise également de préférence des informations fournies par un module de navigation 10, par exemple du type GPS, en particulier les attributs délivrés par un tel module 10 permettant de savoir que le véhicule est bien sur une voie rapide à chaussées séparées par un rail de sécurité.

Toutes ces données vont pouvoir être combinées dans une étape 40 afin de permettre une détection de présence et une modélisation du rail de sécurité, détection à laquelle on peut associer un indice de confiance $I_{CONF}$. On peut utiliser un formalisme du type Dempster-Shafer, ou tout autre algorithme d'apprentissage comme Adaboost ou SVM (initiales anglo-saxonnes mises pour Support Vector Machine) pour délivrer une information de détection de rail de sécurité avec son indice de confiance associé.

La modélisation du rail de sécurité 2 utilise les mesures effectuées par le capteur scanner laser 20 (points d'impact), auxquelles on a de préférence enlevé les mesures coïncidant à des objets détectés à l'avant du véhicule automobile à partir des images capturées par la caméra. On peut utiliser pour cette modélisation l'algorithme précité de Ransac, ou tout autre algorithme équivalent permettant de déterminer une droite qui s'ajuste au mieux aux points d'impact retenus.

L'indice de confiance $I_{CONF}$ associé à la détection par le capteur scanner laser 20 est déterminé avantageusement comme variant en fonction du nombre et/ou de la position d'objets détectés à l'avant du véhicule automobile à partir des images capturées par la caméra (voir courbe $C_1$ de la figure 3 qui donne un exemple de variations de cet indice de confiance $I_{CONF}$ en fonction du paramètre O représentatif du nombre et/ou de la position des obstacles détectés par la caméra à l'avant du véhicule). L'indice de confiance peut en outre prendre en compte d'autres informations résultant de traitements d'images, par exemple l'identification des lignes de marquage au sol permettant de savoir si le véhicule se déplace sur une voie plus ou moins proche du rail de sécurité.

L'activation du mode de conduite est déclenchée par le système lorsque l'indice de confiance $I_{CONF}$ est supérieur à un seuil de confiance $I_{th}$ pendant au moins une durée prédéfinie correspondant à une distance de roulage minimum $D_{th}$ parcourue par le véhicule automobile (étapes 50 et 60).

Pour éviter, une fois ce mode activé, une désactivation non désirée alors même que le véhicule est toujours sur la voie rapide avec des conditions de trafic s'intensifiant, il est prévu de compléter le traitement par les étapes suivantes :

On réalise une estimation (étape 70) de la densité de trafic à l'avant du véhicule automobile à partir des images capturées par la caméra frontale 30, et plus précisément des véhicules tiers détectés par le traitement de ces images. Plusieurs paramètres peuvent être utilisés, seuls ou en combinaison, pour établir une estimation, notée Dens dans la suite et sur les figures, de la densité de trafic :

Un premier paramètre $P_1$ est relatif à l'observation de l'environnement du véhicule, lié à la présence de véhicules tiers à l'avant du véhicule 1. Ce premier paramètre est par exemple fonction du nombre de véhicules tiers détectés sur une fenêtre temporelle donnée (par exemple pendant une minute) en utilisant les images de la caméra 30, d'une estimation de la vitesse moyenne globale de ces véhicules tiers, et de la limitation de vitesse sur la voie rapide (obtenue via le module de navigation 10).

Un deuxième paramètre $P_2$ est relatif au comportement de déplacement du véhicule 1, fonction par exemple de sa vitesse moyenne observée sur une fenêtre temporelle donnée (par exemple pendant une minute), du nombre d'accélérations positives ou négatives constatées, et de la limitation de vitesse sur la voie rapide (obtenue via le module de navigation 10).

Un troisième paramètre $P_3$ possible est relatif au comportement de déplacement du véhicule 1 par rapport au véhicule tiers le plus proche du véhicule 1. Ce troisième paramètre est fonction par exemple de la vitesse moyenne du véhicule 1 observée sur une fenêtre temporelle donnée (par exemple pendant une minute), du nombre d'accélérations positives ou négatives constatées, de la distance moyenne entre le véhicule 1 et le véhicule tiers le plus proche, et de la limitation de vitesse sur la voie rapide (obtenue via le module de navigation 10).

D'autres paramètres peuvent être envisagés, comme, dans le cas où certains véhicules tiers détectés sont des deux-roues, un paramètre $P_4$ relatif au comportement des deux roues par rapport à des véhicules tiers détectés, en particulier une comparaison des vitesses de ces deux roues avec celles des véhicules tiers.

L'estimation Dens de la densité de trafic peut être alors obtenue à partir d'une somme pondérée des différents paramètres utilisés, par exemple selon l'équation :

$$Dens = \frac{\sum\limits_{k=1}^{4} \alpha_k P_k}{\sum\limits_{k=1}^{4} \alpha_k}$$

dans laquelle $\alpha_k$ représente le coefficient de pondération associé à chaque paramètre $P_k$.

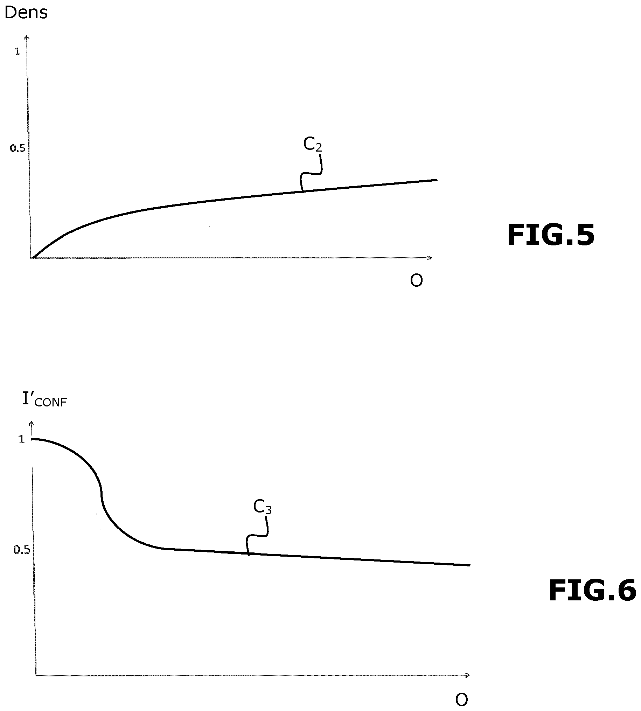

La courbe $C_2$ représentée sur la figure 5 illustre les variations de la densité de trafic Dens en fonction du paramètre O.

A l'issue de l'étape 70, la densité de trafic estimée est utilisée dans le calcul d'un nouvel indice de confiance $I'_{CONF}$ associé à la détection du rail de sécurité, qui est fonction d'une combinaison de l'indice de confiance $I_{CONF}$ associé à la détection de présence du rail de sécurité et de la densité de trafic estimée.

A titre d'exemple la combinaison de l'indice de confiance $I_{CONF}$ associé à la détection de présence du rail de sécurité et de la densité de trafic estimée est une somme, ce qui peut être formulé mathématiquement par l'expression

$$I'_{CONF} = \min(I_{CONF} + Dens;\ 1)$$

En d'autres termes, du fait que l'on sait déjà qu'un rail de sécurité a été détecté avec un indice de confiance suffisant, et que par suite, le mode automatique a été activé (étape 60), on augmente la valeur de l'indice de confiance pour éviter une désactivation prématurée du mode de conduite automatique due à une densification du trafic.

L'indice de confiance $I'_{CONF}$ calculé à l'étape 80 peut éventuellement, lors d'une étape 90, être diminué d'une valeur prenant en compte la distance parcourue par le véhicule automobile 1 pendant laquelle l'indice de confiance $I_{CONF}$ est faible.

C'est cette nouvelle valeur de l'indice de confiance $I'_{CONF}$ qui est prise en compte dans la comparaison (étape 100) avec le seuil de confiance $I_{th}$ pour décider si le mode de conduite automatique peut être maintenu (étape 120) ou au contraire être désactivé (étape 110) selon que la valeur de l'indice de confiance $I'_{CONF}$ est supérieure ou inférieure au seuil de confiance

La courbe $C_3$ représentée sur la figure 3 illustre les variations de l'indice de confiance $I'_{CONF}$ en fonction du paramètre O, résultant de la somme des courbes $C_1$ et $C_2$. En comparant avec la courbe $C_1$ de la figure 3, on constate qu'en prenant en compte l'estimation Dens de la densité de trafic dans le calcul de l'indice de confiance, on maintient une valeur plus importante de cette confiance lorsque le trafic s'intensifie, réduisant ainsi le risque d'une désactivation non souhaitée du mode de conduite automatique.

Lorsque le trafic devient à nouveau fluide, deux cas de figures peuvent se présenter : soit la détection du rail de sécurité est associée à un indice de confiance suffisant, de sorte que le mode de conduite automatique sera maintenu, soit l'indice de confiance devient trop faible et conduit à la désactivation du mode de conduite automatisé.

Bien entendu, d'autres conditions indépendantes du calcul de l'$I_{CONF}$ peuvent requérir une désactivation immédiate du mode de conduite automatique, telles que la détection par la caméra que le véhicule franchit une ligne de sortie, une entrée de ville ou la présence d'un feu tricolore, ou le fait que la navigation prédit un contexte défavorable à celui d'une route à chaussée séparée.

**Revendications**

1. Procédé d'assistance à la conduite d'un véhicule automobile (1) sur une voie rapide à chaussées séparées par un rail de sécurité (2) comprenant :

- une étape (40) de détection de présence et de modélisation du rail de sécurité (2) à partir de mesures effectuées en continu par au moins un capteur scanner laser (20) monté sur le véhicule automobile (1), comprenant la détermination d'un indice de confiance $I_{CONF}$ associé à la détection par le capteur scanner laser (20);
- une étape (60) d'activation d'un mode de conduite automatique lorsque ledit indice de confiance $I_{CONF}$ est supérieur à un seuil de confiance $I_{th}$ pendant au moins une durée prédéfinie correspondant à une distance de roulage minimum $D_{th}$ parcourue par le véhicule automobile (1) ;
- une étape (120) de maintien dudit mode de conduite automatique tant qu'un indice de confiance courant associé à la détection est supérieur audit seuil de confiance $I_{th}$ ; et
- une étape (110) de désactivation dudit mode de conduite automatique lorsque l'indice de confiance courant passe en-dessous dudit seuil de confiance ;

ledit procédé comportant en outre une étape (70) d'estimation de la densité de trafic à l'avant du véhicule automobile (1) à partir d'images capturées par une caméra (30) embarquée sur ledit véhicule automobile (1), procédé dans lequel, après activation (60) dudit mode de conduite automatique, ledit indice de confiance courant pris en compte dans les étapes (110, 120) de désactivation et de maintien est fonction d'une combinaison de l'indice de confiance $I_{CONF}$ associé à la détection de présence du rail de sécurité et de la densité de trafic estimée.

2. Procédé selon la revendication 1, **caractérisé en ce que** l'indice de confiance $I_{CONF}$ associé à la détection par le capteur scanner laser (20) est déterminé en fonction du nombre et/ou de la position d'objets détectés à l'avant du véhicule automobile (1) à partir des images capturées par la caméra (30).

3. Procédé selon l'une quelconque des revendications précédentes, **caractérisé en ce que** la modélisation du rail de sécurité (2) utilise les mesures effectuées en continu par le capteur scanner laser (20), auxquelles on a enlevé les mesures coïncidant à des objets détectés à l'avant du véhicule automobile (1) à partir des images capturées par la caméra (30).

4. Système d'assistance à la conduite d'un véhicule automobile (1) sur une voie rapide à chaussées séparées par un rail de sécurité (2) comprenant un capteur scanner laser (20) et une caméra (30) embarqués sur ledit véhicule automobile (1), ledit système étant configuré pour implémenter les étapes suivantes :

- une étape (40) de détection de présence et de modélisation du rail de sécurité (2) à partir de mesures effectuées en continu par au moins ledit capteur scanner laser (20), comprenant la détermination d'un indice de confiance $I_{CONF}$ associé à la détection par le capteur scanner laser (20);
- une étape (60) d'activation d'un mode de conduite automatique lorsque ledit indice de confiance $I_{CONF}$ est supérieur à un seuil de confiance $I_{th}$ pendant au moins une durée prédéfinie correspondant à une distance de roulage minimum $D_{th}$ parcourue par le véhicule automobile (1) ;
- une étape (120) de maintien dudit mode de conduite automatique tant qu'un indice de confiance courant associé à la détection est supérieur audit seuil de confiance $I_{th}$ ;
- une étape (110) de désactivation dudit mode de conduite automatique lorsque l'indice de confiance courant passe en-dessous dudit seuil de confiance ; et
- une étape (70) d'estimation de la densité de trafic à l'avant du véhicule automobile (1) à partir d'images capturées par ladite caméra (30),

système dans lequel, après activation (60) dudit mode de conduite automatique, ledit indice de confiance courant pris en compte dans les étapes (110, 120) de désactivation et de maintien est fonction d'une somme de l'indice de confiance $I_{CONF}$ associé à la détection de présence du rail de sécurité et de la densité de trafic estimée.

**Patentansprüche**

1. Fahrassistenzverfahren eines Kraftfahrzeugs (1) auf einer Schnellstraße mit durch eine Leitplanke (2) getrennten Fahrbahnen, das enthält:

   - einen Schritt (40) der Erfassung des Vorhandenseins und der Modellierung der Leitplanke (2) ausgehend von durchgehend von mindestens einem im Kraftfahrzeug (1) eingebauten Laserscanner-Sensor (20) durchgeführten Messungen, der die Bestimmung eines der Erfassung durch den Laserscanner-Sensor (20) zugeordneten Vertrauensindex $I_{CONF}$ enthält;
   - einen Schritt (60) der Aktivierung eines automatischen Fahrmodus, wenn der Vertrauensindex $I_{CONF}$ während mindestens einer vordefinierten Dauer, die einer vom Kraftfahrzeug (1) zurückgelegten Mindestfahrstrecke $D_{th}$ entspricht, höher als eine Vertrauensschwelle $I_{th}$ ist;
   - einen Schritt (120) der Beibehaltung des automatischen Fahrmodus, so lange ein der Erfassung zugeordneter aktueller Vertrauensindex höher ist als die Vertrauensschwelle $I_{th}$; und
   - einen Schritt (110) der Deaktivierung des automatischen Fahrmodus, wenn der aktuelle Vertrauensindex unter die Vertrauensschwelle sinkt; wobei das Verfahren außerdem einen Schritt (70) der Schätzung der Verkehrsdichte vor dem Kraftfahrzeug (1) ausgehend von von einer an Bord des Kraftfahrzeugs (1) befindlichen Kamera (30) aufgenommenen Bildern aufweist, Verfahren, bei dem nach Aktivierung (60) des automatischen Fahrmodus der in den Schritten (110, 120) der Deaktivierung und der Beibehaltung berücksichtigte aktuelle Vertrauensindex von einer Kombination des der Erfassung des Vorhandenseins der Leitplanke zugeordneten Vertrauensindex $I_{CONF}$ und der geschätzten Verkehrsdichte abhängt.

2. Verfahren nach Anspruch 1, **dadurch gekennzeichnet, dass** der der Erfassung durch den Laserscanner-Sensor (20) zugeordnete Vertrauensindex $I_{CONF}$ abhängig von der Anzahl und/oder der Position von Gegenständen bestimmt wird, die vor dem Kraftfahrzeug (1) ausgehend von den von der Kamera (30) aufgenommenen Bilder erfasst werden.

3. Verfahren nach einem der vorhergehenden Ansprüche, **dadurch gekennzeichnet, dass** die Modellierung der Leitplanke (2) die Messungen verwendet, die durchgehend vom Laserscanner-Sensor (20) ausgeführt werden, von denen die Messwerte entfernt wurden, die mit Gegenständen zusammenfallen, die vor dem Kraftfahrzeug (1) ausgehend von den von der Kamera (30) aufgenommenen Bildern erfasst werden.

4. Fahrassistenzsystem eines Kraftfahrzeugs (1) auf einer Schnellstraße mit durch eine Leitplanke (2) getrennten Fahrbahnen, das einen Laserscanner-Sensor (20) und eine an Bord des Kraftfahrzeugs (1) befindliche Kamera (30) enthält, wobei das System konfiguriert ist, die folgenden Schritte zu implementieren:

   - einen Schritt (40) der Erfassung des Vorhandenseins und der Modellierung der Leitplanke (2) ausgehend von durchgehend von mindestens einem Laserscanner-Sensor (20) ausgeführten Messungen, der die Bestimmung eines der Erfassung durch den Laserscanner-Sensor (20) zugeordneten Vertrauensindex $I_{CONF}$ enthält;
   - einen Schritt (60) der Aktivierung eines automatischen Fahrmodus, wenn der Vertrauensindex $I_{CONF}$ während mindestens einer vordefinierten Dauer, die einer vom Kraftfahrzeug (1) zurückgelegten Mindestfahrstrecke $D_{th}$ entspricht, höher als eine Vertrauensschwelle $I_{th}$ ist;
   - einen Schritt (120) der Beibehaltung des automatischen Fahrmodus, so lange ein der Erfassung zugeordneter aktueller Vertrauensindex höher ist als die Vertrauensschwelle $I_{th}$;
   - einen Schritt (110) der Deaktivierung des automatischen Fahrmodus, wenn der aktuelle Vertrauensindex unter die Vertrauensschwelle sinkt; und
   - einen Schritt (70) der Schätzung der Verkehrsdichte vor dem Kraftfahrzeug (1) ausgehend von von der Kamera (30) aufgenommenen Bildern, System, bei dem nach Aktivierung (60) des automatischen Fahrmodus der in den Schritten (110, 120) der Deaktivierung und der Beibehaltung berücksichtigte aktuelle Vertrauensindex von einer Summe des der Erfassung des Vorhandenseins der Leitplanke zugeordneten Vertrauensindex $I_{CONF}$ und der geschätzten Verkehrsdichte abhängt.

**Claims**

1. Method for assisting in the driving of a motor vehicle (1) on a fast road with carriageways separated by a safety rail (2) comprising:

   - a step (40) of detecting the presence of and modelling the safety rail (2) from measurements performed continuously by at least one laser scanner sensor (20) mounted on the motor vehicle (1), comprising determining a confidence index $I_{CONF}$ associated with the detection by the laser scanner sensor (20);

- a step (60) of activating an automatic driving mode when said confidence index $I_{CONF}$ is above a confidence threshold $I_{th}$ for at least a predefined time corresponding to a minimum rolling distance $D_{th}$ travelled by the motor vehicle (1);

- a step (120) of maintaining said automatic driving mode as long as a current confidence index associated with the detection is above said confidence threshold $I_{th}$; and

- a step (110) of deactivating said automatic driving mode when the current confidence index passes below said confidence threshold;

said method also comprising a step (70) of estimating the density of traffic in front of the motor vehicle (1) from images captured by a camera (30) embedded on said motor vehicle (1), a method in which, after the activation (60) of said automatic driving mode, said current confidence index taken into account in the deactivation and maintaining steps (110, 120) is a function of a combination of the confidence index $I_{CONF}$ associated with the detection of the presence of the safety rail and of the estimated traffic density.

2. Method according to Claim 1, **characterized in that** the confidence index $I_{CONF}$ associated with the detection by the laser scanner sensor (20) is determined as a function of the number and/or of the position of objects detected in front of the motor vehicle (1) from the images captured by the camera (30).

3. Method according to either one of the preceding claims, **characterized in that** the modelling of the safety rail (2) uses the measurements performed continuously by the laser scanner sensor (20), from which have been removed the measurements coinciding with objects detected in front of the motor vehicle (1) from the images captured by the camera (30).

4. System for assisting in the driving of a motor vehicle (1) on a fast road with carriageways separated by a safety rail (2) comprising a laser scanner sensor (20) and a camera (30) embedded on said motor vehicle (1), said system being configured to implement the following steps:

   - a step (40) of detecting the presence of and modelling the safety rail (2) from measurements performed continuously by at least said laser scanner sensor (20), comprising the determination of a confidence index $I_{CONF}$ associated with the detection by the laser scanner sensor (20);

   - a step (60) of activating an automatic driving mode when said confidence index $I_{CONF}$ is above a confidence threshold $I_{th}$ for at least a predefined time corresponding to a minimum rolling distance $D_{th}$ travelled by the motor vehicle (1);

- a step (120) of maintaining said automatic driving mode as long as a current confidence index associated with the detection is above said confidence threshold $I_{th}$;

- a step (110) of deactivating said automatic driving mode when the current confidence index passes below said confidence threshold; and

- a step (70) of estimating the density of traffic in front of the motor vehicle (1) from images captured by said camera (30),

a system in which, after activation (60) of said automatic driving mode, said current confidence index taken into account in the deactivation and maintaining steps (110, 120) is a function of a sum of the confidence index $I_{CONF}$ associated with the detection of the presence of the safety rail and of the estimated traffic density.

**FIG.1**

$I_{CONF}$

$I_{CONF} > I_{th}$
Dist > $D_{th}$ ?

**FIG.2a**

**FIG.2b**

**FIG.2c**

$I_{CONF}$

1

0.5

$C_1$

O

**FIG.3**

10

20

30

$I_{CONF}$  40

$I_{CONF} > I_{th}$
Dist $> D_{th}$ ?  50

60

70

Dens

$I'_{CONF} = \min (I_{CONF} + Dens\;;1)$  80

90

$I'_{CONF} > I_{th}$ ?  100

110

120

**FIG.4**

Dens

**FIG.5**

O

I'<sub>CONF</sub>

**FIG.6**

O

**EP 3 519 267 B1**

## RÉFÉRENCES CITÉES DANS LA DESCRIPTION

### Documents brevets cités dans la description

- US 2002107637 A1